# EUROPÄISCHE PATENTSCHRIFT

(11) **EP 3 363 265 B1**
(45) Veröffentlichungstag und Bekanntmachung des Hinweises auf die Patenterteilung: **02.11.2022**
(21) Anmeldenummer: 16781052.2
(22) Anmeldetag: 05.09.2016
(51) Int. Cl.: H05B 45/48, H05B 45/50, H05B 45/395

(54) **SCHALTUNG ZUM FLACKERARMEN BETREIBEN VON LEUCHTDIODEN SOWIE LEUCHTMITTEL UND LEUCHTE**
CIRCUIT FOR OPERATING LIGHT-EMITTING DIODES HAVING LOW FLICKER, AND LIGHTING MEANS AND LAMP
CIRCUIT SERVANT À FAIRE FONCTIONNER AVEC PEU DE SCINTILLEMENTS DES DIODES ÉLECTROLUMINESCENTES AINSI QUE MOYEN D'ÉCLAIRAGE ET APPAREIL D'ÉCLAIRAGE

(30) Priorität: 14.10.2015 DE 102015117481
(43) Veröffentlichungstag der Anmeldung: 22.08.2018
(73) Patentinhaber: ATLAS ELEKTRONIK GmbH, 28309 Bremen (DE)
(72) Erfinder: WIESNER, Uwe, 28355 Bremen (DE); WITTSCHIEF, Norbert, 28832 Achim (DE)
(74) Vertreter: thyssenkrupp Intellectual Property GmbH
(86) Internationale Anmeldenummer: PCT/DE2016/100407
(87) Internationale Veröffentlichungsnummer: WO 2017/063630

(56) Entgegenhaltungen:
- WO-A1-2014/148767
- CN-A- 103 687 151
- US-A1- 2014 210 351
- US-A1- 2015 002 037

## Beschreibung

Die Erfindung betrifft eine Schaltung, insbesondere zum flackerarmen Betreiben von Leuchtdioden, mit n LED-Ketten mit einer jeweiligen LED-Anzahl N, wobei das n ganzzahlig und größer 1 und das N ganzzahlig und größer 0 ist, einem Gesamtversorgungsspannungsanschluss, an welchem eine Wechselspannung als zeitabhängige Versorgungsspannung anlegbar ist, und einer Recheneinheit, die ausgebildet ist, die einzelnen LED-Ketten mit steigender Versorgungsspannung stufenweise zuzuschalten und mit fallender Versorgungsspannung stufenweise abzuschalten. Ferner weist die Schaltung eine Auffüllschaltung, insbesondere eine Valley-Fill-Schaltung, auf, welche unterhalb einer Versorgungseinsatzspannung wenigstens eine der LED-Ketten mit einer Spannung und/oder mit einem Strom versorgt und oberhalb einer Versorgungsstartspannung geladen wird sowie ein Leuchtmittel und eine Leuchte.

Wechselspannungsbetriebene LED-Leuchten (LED = light emitting diode / Leuchtdiode) werden vermehrt aufgrund ihrer günstigen Eigenschaften in Bezug auf Lichtausbeute, Lebensdauer und Energieeinsatz verwendet. Dazu wird im Allgemeinen die netzseitige Wechselspannung gleichgerichtet und es werden einzelne LED-Ketten angesteuert.

Über eine gerichtete Halbwelle (180°) einer sinusförmigen Wechselspannung hinweg sind über ca.50° die LED-Ketten nicht beschaltet. Lediglich über den Phasenwinkel von ca.130° hinweg ist zumindest eine oder sind mehrere LED-Ketten beschaltet, sodass während dieser Zeit die beschalteten Leuchtdioden ein Lichtsignal abgeben. Das bedeutet, dass ca.28% der Zeit die Leuchtdioden kein Licht abgegeben.

Dies führt zu einem sogenannten Flackern. Insbesondere in Räumen oder Orten die gut beleuchtet sein müssen, ist ein derartiges Flackern unerwünscht, da dieses die Augen leicht ermüdet und beispielsweise ein effektives Arbeiten über einen Arbeitstag hinweg nicht gewährleistet werden kann. Insbesondere wenn eine derartige Lichtquelle aus dem Augenwinkel betrachtet wird, empfinden einige Betrachter dieses Flackern zudem als unangenehm.

Zum Vermindern dieses Flackerns, gelegentlich auch "Flickern" genannt, sind sogenannte Valley-Fill-Schaltungen vorgeschlagen worden. Diese Valley-Fill-Schaltung übernimmt unterhalb von bestimmten Versorgungsspannungswerten die Versorgung einzelner LED-Ketten mit Strom, sodass diese im Betriebsfall quasi ständig leuchten. Dies vermindert das Flackern.

Nachteilig bei solchen Lösungen ist, dass während des Ladens (oberhalb eines betragsmäßigen Wertes der Versorgungsspannung) der Valley-Fill-Schaltung die Stromaufnahme der LED-Ketten und der Valley-Fill Schaltung zu einem Gesamtstrom führen, dessen Verlauf stark von einem gewünschten (Teil-)Sinusverlauf abweicht. Im Wesentlichen sieht der Gesamtstromverlauf wie eine Sinushalbwelle aus, auf welcher mittig ein Buckel (Aufnahmestromverlauf der Valley-Fill-Schaltung) aufgesetzt ist. US2016/0050731A1 und US2015/0002037A1 offenbaren LED-Schaltungen mit Auffüllschaltungen.

Ein derartiger Stromverlauf ist für die Netzbetreiber unerwünscht, da entsprechende Generatoren, Umformer, Transformatoren mit entsprechenden Impedanzen vorzuhalten sind.

Aufgabe der Erfindung ist es den Stand der Technik zu verbessern.

Gelöst wird die Aufgabe durch die Gegenstände der unabhängigen Patentansprüche.

Somit kann ein Gesamtstromverlauf der Schaltung bereitgestellt werden, welcher im Wesentlichen einen sinusförmigen oder teilsinusförmigen (z.B. Halbwelle eines Sinus) Verlauf aufweist.

Folgendes Begriffliche sei erläutert.

Bei der "Schaltung" handelt es sich insbesondere um eine elektronische Schaltung, welche auf einer entsprechenden Platine mit entsprechenden Bauteilen ausgestaltet ist. Aber auch freiverdrahtete Leitungen und Bauteile können die Schaltung umsetzen.

Unter einem "flackerarmen Betreiben" wird insbesondere verstanden, dass eine vollständige Dunkelheit sämtlicher LEDs ausgeschlossen oder für eine entsprechende Zeit reduziert ist. Insbesondere umfasst der Begriff flackerarm auch den Begriff flackerfrei, wobei zwar weiterhin Helligkeitsunterschiede vorhanden sein können, jedoch im Wesentlichen eine durchgehende Beleuchtung gegeben ist.

Unter "normgemäß" ist insbesondere zu verstehen, dass der Stromverlauf der Schaltung im Wesentlichen sinusförmig oder teilsinusförmig ist und somit für bestimmte Leistungsklassen eine Leuchte mit der erfindungsgemäßen Schaltung zugelassen ist. "Im Wesentlichen" soll dabei charakterisieren, dass durchaus Abweichungen bestehen können, welche sich beispielsweise aus einem treppenförmigen Verlauf aufgrund der Beschaltung ergeben.

Unter "Leuchtdioden" im Folgenden auch LED (light emitting diode) abgekürzt, sind insbesondere Halbleiterbauelemente zu verstehen, welche bei einer angelegten Spannung oder bei einem fließenden Strom Licht, insbesondere im optischen Spektrum von 400-800nm, aussenden.

Die "LED-Ketten" umfassen im Allgemeinen mehrere Leuchtdioden. Wenn zuvor bereits LED-Ketten mit mehreren Leuchtdioden verwendet werden, werden auch Einzeldioden, welche entsprechend angesteuert werden, als LED-Kette bezeichnet. So kann beispielsweise eine der LED-Ketten durch eine oder mehrere Z-Dioden (Zenerdioden) gebildet werden.

Insbesondere gibt das "n" die Anzahl der LED-Ketten an. Üblicherweise werden zwischen 2 und 10 LED-Ketten und besonders bevorzugt zwischen 4 und 6 LED-Ketten verwendet. Die LED-Anzahl "N" gibt die Anzahl der LEDs an.

Der "Gesamtversorgungsspannungsanschluss" wird insbesondere durch eine Anschlusseinrichtung gebildet, welche sowohl die einzelne LED-Kette als auch die Auffüllschaltung (direkt oder indirekt) versorgt. Insbesondere kann in diesem Gesamtspannungsversorgungsanschluss eine gleichgerichtete Wechselspannung mit 230V_{eff} aufgeprägt werden. Dies bedeutet vorliegend, dass sich an dem Gesamtversorgungsspannungsanschluss im Allgemeinen gleichgerichtete sinusförmige Halbwellen mit Spannungswerten zwischen 0 und ca. 325V anliegen.

Unter der "zeitabhängigen Versorgungsspannung" werden insbesondere Spannungen verstanden, bei denen sich der Spannungswert abhängig von der Zeit oder entsprechend einem Phasenwinkel ändert. Dadurch, dass insbesondere bei einer Wechselspannung diese gleichgerichtet wird, liegt anschließend insbesondere eine zeitabhängige Gleichspannung vor.

Mittels der "LED-Ketten-Beschaltung" können einzelne oder mehrere LED-Ketten insbesondere abhängig von der an den Gesamtversorgungsanschluss anliegenden Spannung beschaltet werden. So kann zum Beispiel bei fünf LED Ketten die erste LED-Kette einer ansteigenden Spannung bis 142V allein betrieben werden. Anschließend kann durch entsprechendes Umschalten die nächste LED-Kette bis zu einer Spannung von 218V zugeschaltet werden. Bis zu einer Spannung von 257V kann eine weitere LED-Kette und bis zu einer Spannung von 283V eine vierte LED-Kette und ab 320V die letzte LED-Kette hinzugeschaltet werden.

Bei fallender Spannung werden nun in umgekehrter Reihenfolge die einzelnen LED-Ketten wieder abgeschaltet, sodass ab einer Spannung von 320V die letzte LED-Kette, ab 283V die vierte LED-Kette und so weiter abgeschaltet werden.

Besonders vorteilhaft ist es, wenn die LED-Ketten-Beschaltung das Beschalten der einzelnen LED-Ketten mittels schaltbarer Stromquellen realisiert. Diese schaltbaren Stromquellen sind dabei insbesondere derart eingerichtet, dass ein LED-Kettenstrom und somit auch eine LED-Kettenspannung (Spannungsabfall an der LED-Kette oder an den LED-Ketten) während des Betreibens die LED-Kette oder die LED-Ketten im Wesentlichen konstant bleiben. Dies erhöht die Lebensdauer der einzelnen LEDs. Die Realisierung kann beispielsweise mittels analoger Schaltungen oder auch digital mittels eines Mikrocontrollers erfolgen.

Die "Auffüllschaltung" ist insbesondere eine Schaltung oder ein Schaltungsteil, welche oder welches insbesondere bei einem "betragsmäßigen Versorgungsspannungswert" (eine Art Versorgungsstartspannung) geladen wird und welche oder welches ab einer Versorgungseinsatzspannung einen Strom zumindest einer der LED-Ketten aufprägt. Somit umfasst eine Auffüllschaltung sowohl einen Ladungsspeicher als auch einen Ladungsspender, welche entsprechend jeweils aktiviert oder deaktiviert werden. Das Aktivieren und Deaktivieren kann beispielsweise durch analoge Schaltungen oder Mikrocontroller erfolgen.

Insbesondere umfasst die Auffüllschaltung eine (modifizierte) Valley-Fill-Schaltung. Diese führt zusätzlich insbesondere dazu, dass der Stromverlauf der LED-Ketten sich einem Sinusverlauf annähert. Dies ist insbesondere deshalb vorteilhaft, da dadurch die Netzbetreiber entsprechende Transformatoren geringer auslegen können und somit können sich diesbezüglich Kosteneinsparungen bei den Netzbetreibern ergeben. Zudem kann die Wärmeentwicklung der Schaltung minimiert werden.

Dies liegt unter anderem daran, dass während des Ladens, die (gleichgroßen) Kondensatoren der (modifizierten) Valley-Fill-Schaltung in Reihe geschaltet werden. Beispielsweise werden also die Kondensatoren auf 320V geladen. Sobald die (modifizierte) Valley-Fill-Schaltung die Spannungsversorgung der Ausgangsstromquelle übernimmt, sind die Kondensatoren parallel geschaltet. Dies hat zur Folge, dass sich die Spannung entsprechend halbiert (bei gleichgroßen Kondensatoren) und somit für das obere Beispiel eine Spannung von 160V anliegt. Für den Fall, dass die erste LED-Kette zum Betreiben 140V benötigt, müssen durch die Schaltung lediglich 20V und nicht 180V in Wärme umgewandelt werden.

Im Normalfall werden klassische Valley-Fill-Schaltungen als passive Leistungsfaktorkorrekturfilter zur Vermeidung von unerwünschten Oberschwingungen in elektrischen Netzteilen verwendet. Dazu weisen diese insbesondere einen Gleichrichter auf. Die vorliegende (modifizierte) Valley-Fill-Schaltung, entspricht im Wesentlichen der üblichen Valley-Fill-Schaltung ohne Gleichrichter.

Die "steuerbare und/oder regelbare Stromsenke" nimmt Teile des fließenden Stroms insbesondere zu dem Zeitpunkt auf, zu dem der Auffüllschaltung ein Ladestrom zugeführt wird. Alternativ oder ergänzend, speziell für den Fall, dass die Stromsenke zusätzlich den die LED-Ketten versorgenden Strom bereitstellt, wird der den LED-Ketten versorgende Strom um den Ladestrom der Auffüllschaltung reduziert. Insbesondere entspricht der "in die Stromsenke fließende Strom" mathematisch betragsmäßig dem mathematisch betragsmäßigen Ladestrom der Auffüllschaltung. Unter steuerbar wird insbesondere verstanden, dass anhand eines Steuersignals, z.B. gemessener Ladestrom in die Auffüllschaltung ein Stellsignal der Stromsenke aufgeprägt wird. Steuerbar kann in diesem Zusammenhang auch als ein zeitliches oder entsprechend spannungsabhängiges/phasenabhängiges Steuern und somit als ein An- und/oder Abschalten der Stromsenke verstanden werden. Bei einer Regelung erfolgt zusätzlich eine Rückkopplung.

In einer weiteren Ausprägungsform weist eine der LED-Ketten mehr Leuchtdioden auf, als eine der anderen LED-Ketten. So kann beispielsweise (bei 4 LED Ketten) die erste LED-Kette 44 LEDs, die zweite LED-Kette 24 LEDs, die nächste LED-Kette 12 LEDs, die letzte LED-Kette 8 LEDs aufweisen. Insbesondere ist es vorteilhaft, dass die erste LED-Kette die meisten LEDs aufweist, da diese insbesondere vorrangig beschaltet werden und durch das Beschalten eine Grundhelligkeit ausstrahlt, welche durch die weiteren LED-Ketten im Wesentlichen erhöht wird.

Um eine einfache Realisierung der Stromsenke bereitzustellen, kann die steuerbare oder regelbare Stromsenke eine veränderbare Konstantstromquelle sein.

Unter einer "Konstantstromquelle" ist insbesondere ein Bauteil zu verstehen, welches zumindest über einen gewissen Spannungsbereich einen sich im Wesentlichen nicht ändernden Strom bereitstellt. Insbesondere kann die steuerbare und/oder regelbare Konstantstromquelle dadurch umgesetzt werden, dass ein selbstleitender N-Kanal-FET (FET = Feldeffekttransistor) mit einem zugehörigen Widerstand verwendet wird. Der selbstleitende N-Kanal-FET bewirkt in dieser Ausgestaltung insbesondere, dass die Spannung an dem zugehörigen Widerstand konstant ist, wodurch der Widerstand im Wesentlichen einen konstanten Stromfluss bewirkt.

In einer weiteren Ausführungsform weist die Schaltung eine Strommesseinrichtung auf, welche den Ladestrom der Auffülleinrichtung bestimmt, wobei die steuerbare und/oder regelbare Stromsenke den Versorgungsstrom der LED-Ketten um den bestimmten Ladestrom vermindert.

Zudem kann die Schaltung derart eingerichtet sein, dass entsprechend einem Spannungsabfall an der steuerbaren und/oder regelbaren Stromsenke die LED-Ketten beschaltet werden. Dies wird beispielsweise durch einen Mikrocontroller realisiert.

An dieser Stelle sei angemerkt, dass bei der Verwendung des Wortes "entsprechend" hier und auch im übrigen Text auch abgeleitete Werte umfasst sind. Statt Spannung kann auch ein korrespondierender Strom zu Grunde gelegt werden.

Um in der Schaltung sämtliche steuernden, regelnden und/oder messende Funktionen umzusetzen, weist die Schaltung eine Recheneinheit auf, welche der LED-Ketten-Beschaltung und/oder der steuerbaren/regelbaren Stromsenke zugeordnet ist.

Eine "Recheneinheit" ist insbesondere ein Mikrocontroller, welcher mit einer Software versehen ist.

In einer weiteren Ausführungsform sind der Auffüllschaltung in Reihe geschaltet schaltbare Parallelwiderstände zugeordnet, welche entsprechend eines Wertes der Versorgungsspannung zuschaltbar sind.

Hier ist unter "entsprechend" beispielsweise auch der Spannungsabfall an der Stromsenke mit umfasst.

Netzspannungsabweichungen können dazu führen, dass die Stromsenke und oder die Auffüllschaltung eine größere Wärmeaufnahme haben. Vorliegend kann nun die Eingangsspannung messtechnisch bestimmt werden und entsprechend die Parallelwiderstände, beispielsweise mittels der Recheneinheit, zugeschaltet werden

Um das Flickern der schaltbaren LED-Ketten zu vermindern ist einer LED Kette, mehreren LED-Ketten oder sämtlichen LED-Ketten jeweils ein Kondensator parallelgeschaltet zugeordnet.

In einer weiteren Ausgestaltung weist der Gesamtversorgungsspannungsanschluss eine Gleichrichterschaltung, insbesondere eine Graetz-Brückenschaltung, auf, welche eine Wechselspannung in eine Gleichspannung umwandelt.

Um die Schaltung mit elektrischer Energie zu versorgen, kann die Schaltung eine angelegte Spannungsversorgung aufweisen, welche die zeitabhängige Versorgungsspannung der Schaltung aufprägt.

Vorliegend wird insbesondere unter einer Gleichspannung eine Spannung verstanden, welche ihre Polarität nicht ändert. Weiterhin handelt es sich bei einer Wechselspannung insbesondere um eine Spannung, bei welcher sich die Polarität ändert. Sowohl Wechselspannung als auch Gleichspannung weisen insbesondere zu unterschiedlichen Zeiten (Phasenwinkeln) unterschiedliche Spannungswerte auf.

In einem weiteren Aspekt der Erfindung wird die Aufgabe gelöst durch ein Leuchtmittel, welches eine zuvor beschriebene Schaltung aufweist.

Zusätzlich wird die Aufgabe gelöst durch eine Leuchte, insbesondere Straßenbeleuchtungsanlage, Indoor-Beleuchtungsanlage, Büroräume, Arbeitsplatzbeleuchtung Parkhausbeleuchtung oder Beleuchtungsanlagen für Gänge, Hotels, Flugzeuge und Schiffe, welche ein zuvor beschriebenes Leuchtmittel oder eine entsprechende zuvor beschriebene Schaltung aufweist.

Insbesondere für Plätze an denen dauerhaft gearbeitet werden muss, bieten sich derartige Schaltungen und Leuchten an, da das Flackern reduziert wird und ein dauerhaftes nicht ermüdendes Arbeiten ermöglicht wird.

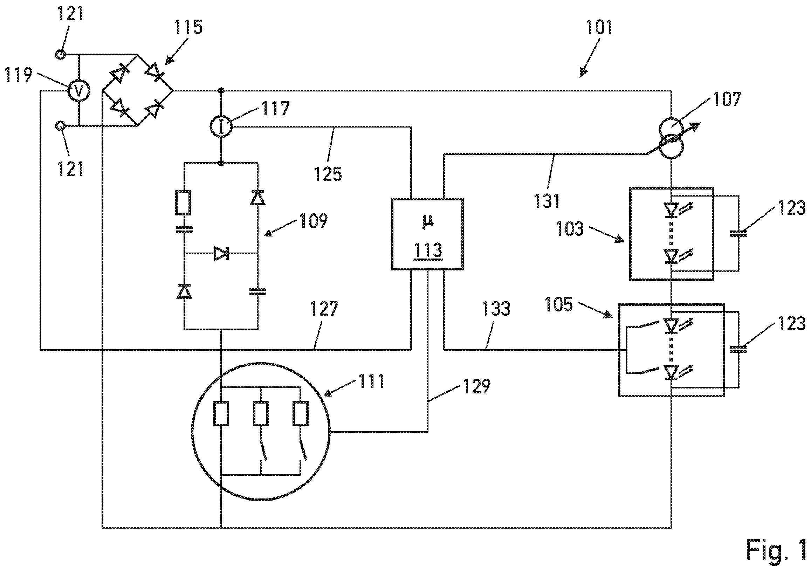

Im Weiteren wird die Erfindung anhand eines Ausführungsbeispiels näher erläutert. In der einzigen
- Figur 1: ist ein stark schematischer Aufbau einer erfindungsgemäßen Schaltung mit zwei LED-Ketten und einer Valley-Fill-Schaltung dargestellt.

Eine LED-Schaltung 101 weist zwei Anschlusskontakte 121 auf, an welche eine Spannungsversorgung angelegt wird. Die LED-Schaltung 101 wird mit 230V Wechselspannung betrieben. Der Graetz-Brückengleichrichter 115 wandelt eine anliegende Wechselspannung in eine Gleichspannung um. Das bedeutet, dass bei einer sinusförmigen Wechselspannung eine Sinushalbwelle quasi "hochgeklappt" wird.

Am Ausgang der Graetz-Brückenschaltung 115 ist eine Valley-Fill-Schaltung 109 angeordnet. Zudem ist ein Strommesser 117 in die Versorgungsleitung der Valley-Fill-Schaltung 109 angebracht. Fußseitig ist zu der Valley-Fill-Schaltung 109 in Reihe eine schaltbare Parallelwiderstandschaltung 111 angeordnet.

Parallel zur Valley-Fill-Schaltung 109 sind in Reihe eine schaltbare Stromquelle 107, eine feste LED-Kette 103 und eine schaltbare LED-Kette 105 geschaltet.

Die Messwerte des Versorgungsspannungsmessers 119 und des Strommessers 117 werden einem Mikrocontroller 113 zugeführt. Dieser Mikrocontroller 113 wertet sowohl die Spannungshöhe als auch die Phase der Wechselspannung des Versorgungsspannungsmessers 119 aus. Zudem bestimmt der Mikrocontroller 113 den gemessenen Stromwert des Strommessers 117.

Zudem kann der Mikrocontroller 113 über ein Parallelwiderstandssignal 129 die einzelnen Schalter der schaltbaren Parallelwiderstände 111 ansteuern. Weiterhin steuert der Mikrocontroller 113 die einzelnen Schalter der schaltbaren LED-Kette 105 mittels eines LED-Kettenschaltsignals 133 und die schaltbare Stromquelle 107 mittels des Stromquellensteuersignals 131 an. In einer Alternativen handelt es sich bei dem Steuersignal 131 um ein der (gleichgerichtete) Netzspannung folgendes Signal, sodass der von der veränderbaren Stromquelle 107 den LED-Ketten 105 aufgeprägte Strom ebenfalls der (gleichgerichteten) Netzspannung folgt, wobei der den LED-Ketten 105 aufgeprägte Strom um den Ladestrom der Valley-Fill-Schaltung 109 vermindert ist.

In einer Alternativen bestimmt der Mikrocontroller 113 mittels eines Spannungsmessers (nicht dargestellt) die an der schaltbaren Stromquelle 107 abfallenden Spannung und schaltet die LED Ketten anhand des bestimmten Spannungsabfalls.

Im Weiteren wird die Funktionsweise der LED-Schaltung 101 schematisch dargelegt.

Es sei angenommen, dass die Kondensatoren der Valley-Fill-Schaltung 109 geladen sind. Fällt eine Versorgungsspannung unterhalb eines Grenzwertes, können die LED-Ketten 103, 105 nicht mehr direkt über die Versorgungsspannung betrieben werden. In diesem Fall speist die Valley-Fill-Schaltung 109 die feste LED-Kette 103 mit einem Strom, welcher die einzelnen Leuchtdioden der festen LED-Kette betreibt.

Steigt nun die Versorgungsspannung wieder an, wird ab einem ersten Schwellwert die feste LED-Kette 103 und bei einem etwas höheren Spannungswert die schaltbare LED-Kette 105 betrieben. Das Zuschalten der schaltbaren LED-Kette 105 erfolgt mittels des Mikrocontrollers 113, welcher das Steuern der Schalter anhand gemessener Spannungswerte des Versorgungsspannungsmessers 119 realisiert.

Insbesondere während die Versorgungsspannung ausreicht um die feste LED-Kette 103 und/oder die schaltbare LED-Kette 105 zu betreiben, liegt der Valley-Fill-Schaltung 109 eine Spannung an, welche zu einem Stromfluss führt, welcher die Kondensatoren der Valley-Fill-Schaltung 109 lädt. Dieser Strom wird mittels des Strommessers 117 bestimmt und das Strommesssignal 125 wird an den Mikrocontroller 113 weitergeleitet.

Um den Wert des gemessenen Stromes und somit die Gesamtstromaufnahme der Schaltung zu kompensieren, steuert der Mikrocontroller 113 mit dem Stromquellensteuersignal 131 die schaltbare Stromquelle 107 an, sodass diese als Stromsenke fungiert. Der in die schaltbare Stromquelle 107 fließende Strom entspricht dem Betrag des die Valley-Fill-Schaltung 109 speisenden Stroms.

Sobald die Wechselspannung wiederrum unterhalb eines Wertes fällt, wird die Valley-Fill-Schaltung 109 nicht weiter geladen. Sobald die Versorgungsspannung auch nicht mehr dazu ausreicht, die feste LED-Kette 103 zu betreiben, prägt die Valley-Fill-Schaltung 109 der festen LED-Kette 103 wiederrum einen Strom auf, welcher zum Leuchten der einzelnen Leuchtdioden der festen LED-Kette 103 führt.

An dieser Stelle sei angemerkt, dass der zu den LED-Ketten 103, 105 jeweils parallel geschaltete Kondensator 123 zu einem verringerten Flickern führt.

Gemäß Norm dürfen Netzspannungen und somit die Versorgungsspannungen für derartige Schaltungen leicht variieren. Häufig weisen Versorgungsspannungen von 230V_{eff} tatsächlich 240V_{eff} oder lediglich 220V_{eff} auf. Derartige Schwankungen führen zu einem geringfügigen anderen Verhalten der Schaltung 101.

Aus diesem Grund wird vorliegend der Betrag der Versorgungsspannung zu jedem Zeitpunkt mittels des Versorgungsspannungsmessers 119 bestimmt. Entsprechend einer Abweichung von der gewünschten Versorgungsspannung von 230V_{eff} werden die einzelnen Parallelwiderstände 111 durch den Mikrocontroller 113 geschaltet.

### Bezugszeichenliste

- 101: LED-Schaltung
- 103: feste LED-Kette
- 105: schaltbare LED-Kette
- 107: schaltbare Stromquelle
- 109: Valley-Fill-Schaltung
- 111: schaltbare Parallelwiderstände
- 113: Mikrocontroller
- 115: Graetz-Brückenschaltung
- 117: Strommesser
- 119: Versorgungsspannungsmesser
- 121: Anschlusskontakte
- 123: LED-Kettenparallelkondensatoren
- 125: Strommesssignal
- 127: Spannungsversorgungsmesssignal
- 129: Paralellwiderstandsschaltsignal
- 131: Stromquellensteuersignal
- 133: LED-Kettenschaltsignal

## Patentansprüche

1. Schaltung (101) zum flackerarmen Betreiben von Leuchtdioden, wobei die Schaltung n LED-Ketten (103, 105) in einer LED-Ketten-Beschaltung mit einer jeweiligen LED-Anzahl N, wobei das n ganzzahlig und größer 1 und das N ganzzahlig und größer 0 ist, einen Gesamtversorgungsspannungsanschluss (121), an welchem eine Wechselspannung als zeitabhängige Versorgungsspannung anlegbar ist, und eine Recheneinheit (113) aufweist, wobei die Recheneinheit ausgebildet ist, die einzelnen LED-Ketten (105) mittels Schaltern mit steigender Versorgungsspannung stufenweise zuzuschalten und mit fallender Versorgungsspannung stufenweise abzuschalten, und die Schaltung eine Auffüllschaltung (109), aufweist, welche unterhalb einer Versorgungseinsatzspannung wenigstens eine der LED-Ketten mit einer Spannung und/oder mit einem Strom versorgt, und oberhalb einer Versorgungsstartspannung geladen wird, wobei die Schaltung eine steuerbare und/oder regelbare Stromsenke (107) aufweist, die in Reihe zu den n LED-Ketten geschaltet ist, **dadurch gekennzeichnet, dass** die Recheneinheit (113) ausgebildet ist, der Stromsenke anhand eines Steuersignals ein Stellsignal aufzuprägen, sodass die Stromsenke einen Versorgungsstrom der LED-Ketten um einen Ladestrom der Auffüllschaltung vermindert, wenn der Auffüllschaltung ein Ladestrom zugeführt wird, sodass ein Gesamtstrom der Schaltung mit einem im Wesentlichen Sinusverlauf vorliegt.

2. Schaltung nach Anspruch 1, **dadurch gekennzeichnet, dass** eine der LED-Ketten mehr Leuchtdioden aufweist als eine der anderen LED-Ketten.

3. Schaltung nach einem der vorherigen Ansprüche, **dadurch gekennzeichnet, dass** die steuerbare und/oder regelbare Stromsenke eine veränderbare Konstantstromquelle ist.

4. Schaltung nach einem der vorherigen Ansprüche, **gekennzeichnet durch** eine Strommesseinrichtung (117), welche den Ladestrom der Auffülleinrichtung bestimmt, wobei die steuerbare und/oder regelbare Stromsenke den Versorgungsstrom der LED-Ketten um den bestimmten Ladestrom vermindert.

5. Schaltung nach einem der vorherigen Ansprüche, **dadurch gekennzeichnet, dass** die Schaltung derart eingerichtet ist, dass entsprechend einem Spannungsabfall an der steuerbaren und/oder regelbaren Stromsenke die LED-Ketten beschaltet sind.

6. Schaltung nach einem der vorherigen Ansprüche, **dadurch gekennzeichnet, dass** die Schaltung mehrere schaltbare Parallelwiderstände (111) aufweist, die in Reihe geschaltet der Auffüllschaltung zugeordnet sind und entsprechend eines Wertes der Versorgungsspannung zuschaltbar sind.

7. Schaltung nach einem der vorherigen Ansprüche, **dadurch gekennzeichnet, dass** die Schaltung einen bzw. mehrere Kondensatoren (123) aufweist, wobei einer LED Kette, mehreren LED-Ketten oder sämtlichen LED-Ketten jeweils ein Kondensator (123) parallelgeschaltet zugeordnet ist.

8. Schaltung nach einem der vorherigen Ansprüche, **dadurch gekennzeichnet, dass** der Gesamtversorgungsspannungsanschluss eine Gleichrichterschaltung (115), insbesondere eine Graetz-Brückenschaltung, aufweist, welche eine Wechselspannung in eine Gleichspannung umwandelt.

9. Leuchtmittel, welches eine Schaltung nach einem der vorherigen Ansprüche aufweist.

10. Leuchte, insbesondere Straßenbeleuchtungsanlage, Indoor-Beleuchtungsanlage, Büroraumbeleuchtungsanlage, Arbeitsplatzbeleuchtungsanlage, Parkhausbeleuchtungsanlage oder Beleuchtungsanlage für Gänge, Hotels, Flugzeuge und Schiffe, welche ein Leuchtmittel nach Anspruch 9 aufweist.

11. Verfahren zum flackerarmen Betreiben von Leuchtdioden mit folgenden Schritten:
- Anlegen einer Wechselspannung als zeitabhängige Versorgungsspannung an eine Schaltung mit n LED-Ketten (103, 105) in einer LED-Ketten-Beschaltung mit einer jeweiligen LED-Anzahl N, wobei das ganzzahlig und größer 1 und das N ganzzahlig und größer 0 ist;
- stufenweises Zuschalten der einzelnen LED-Ketten mit steigender Versorgungsspannung und stufenweises Abschalten der einzelnen LED-Ketten mit fallender Versorgungsspannung;
- Versorgen wenigstens einer der LED-Ketten mit einer Spannung und/oder mit einem Strom von einer Auffüllschaltung, wenn die betragsmäßige Versorgungsspannung unterhalb einer Versorgungseinsatzspannung liegt; und
- Laden der Auffüllschaltung, wenn die Versorgungsspannung oberhalb einer Versorgungsstartspannung liegt,
**gekennzeichnet durch** :
- Vermindern eines Versorgungsstroms der LED-Ketten um einen Ladestrom der Auffüllschaltung, wenn der Auffüllschaltung ein Ladestrom zugeführt wird.

## Claims

1. Circuit (101) for operating light-emitting diodes having low flicker, wherein the circuit has n LED chains (103, 105) in an LED chain circuitry having a respective LED number N, wherein n is an integer and greater than 1 and N is an integer and greater than 0, a total supply voltage connection (121) to which an AC voltage is able to be applied as time-dependent supply voltage, and a computation unit (113), wherein the computation unit is designed to use switches to connect the individual LED chains (105) in stages in the event of rising supply voltage and to disconnect them in stages in the event of falling supply voltage, and the circuit has a valley-fill circuit (109), which below a cut-off supply voltage supplies at least one of the LED chains with a voltage and/or with a current and above a starting supply voltage is charged, wherein the circuit has a controllable and/or regulatable current sink (107) connected in series with the n LED chains, **characterized in that** the computation unit (113) is designed to impress an actuating signal onto the heat sink on the basis of a control signal so that the heat sink reduces a supply current of the LED chains by a charging current of the valley-fill circuit when the charging current is fed to the valley-fill circuit such that a total current of the circuit is present with a substantially sinusoidal profile.

2. Circuit according to Claim 1, **characterized in that** one of the LED chains has more light-emitting diodes than one of the other LED chains.

3. Circuit according to one of the preceding claims, **characterized in that** the controllable and/or regulatable heat sink is a variable constant current source.

4. Circuit according to one of the preceding claims, **characterized by** a current measuring device (117) that determines the charging current of the valley-fill device, wherein the controllable and/or regulatable heat sink reduces the supply current of the LED chains by the charging current that is determined.

5. Circuit according to one of the preceding claims, **characterized in that** the circuit is set up in such a way that the LED chains are wired in accordance with a voltage drop at the controllable and/or regulatable heat sink.

6. Circuit according to one of the preceding claims, **characterized in that** the circuit comprises a plurality of switchable parallel resistors (111), which are assigned to the valley-fill circuit in a manner connected in series and which are able to be connected according to a value of the supply voltage.

7. Circuit according to one of the preceding claims, **characterized in that** the circuit has one or more capacitors (123), wherein one capacitor (123) is assigned in a manner connected in parallel to one LED chain, to a plurality of LED chains or to all of the LED chains.

8. Circuit according to one of the preceding claims, **characterized in that** the total supply voltage connection has a rectifier circuit (115), in particular a Graetz bridge circuit, which converts an AC voltage to a DC voltage.

9. Illuminant, which has a circuit according to one of the preceding claims.

10. Luminaire, in particular street lighting system, indoor lighting system, office lighting system, workplace lighting system, car park lighting system or lighting systems for corridors, hotels, aircraft and ships, which comprises an illuminant according to Claim 9.

11. Method for operating light-emitting diodes having low flicker comprising the following steps:
- applying an AC voltage as time-dependent supply voltage to a circuit having n LED chains (103, 105) in an LED chain circuitry having the respective LED number N, wherein n is an integer and greater than 1 and N is an integer and greater than 0;
- connecting the individual LED chains in stages in the event of rising supply voltage and disconnecting them in stages in the event of falling supply voltage;
- supplying at least one of the LED chains with a voltage and/or with a current from a valley-fill circuit when the absolute value of the supply voltage is below a cut-off supply voltage; and
- charging the valley-fill circuit when the supply voltage is above a starting supply voltage,
**characterized by**:
- reducing a supply current of the LED chains by a charging current of the valley-fill circuit when a charging current is supplied to the valley-fill circuit.

## Revendications

1. Circuit (101) destiné à faire fonctionner avec peu de scintillements des diodes électroluminescentes, le circuit possédant n chaînes de LED (103, 105) en une connexion en chaînes de LED comprenant respectivement un nombre N de LED, n étant un nombre entier et supérieur à 1 et N étant un nombre entier et supérieur à 0, une borne de tension d'alimentation globale (121), à laquelle peut être appliquée une tension alternative en tant que tension d'alimentation dépendante du temps, et une unité de calcul (113), l'unité de calcul étant configurée pour mettre en circuit graduellement les chaînes de LED (105) individuelles au moyen de commutateurs à mesure que la tension d'alimentation croît et les mettre hors circuit graduellement à mesure que la tension d'alimentation décroît, et le circuit possédant un circuit de remplissage (109), lequel alimente au moins l'une des chaînes de LED avec une tension et/ou avec un courant au-dessous d'une tension de blocage d'alimentation, le circuit possédant un récepteur de courant (107) commandable et/ou régulable, qui est branché en série avec les n chaînes de LED, **caractérisé en ce que** l'unité de calcul (113) est configurée pour appliquer au récepteur de courant, au moyen d'un signal de commande, un signal de réglage de sorte que le récepteur de courant réduit un courant d'alimentation des chaînes de LED d'un courant de charge du circuit de remplissage lorsqu'un courant de charge est acheminé au circuit de remplissage, de sorte qu'un courant total du circuit ayant un tracé sensiblement sinusoïdal soit présent.

2. Circuit selon la revendication 1, **caractérisé en ce que** l'une des chaînes de LED possède plus de diodes électroluminescentes que l'une des autres chaînes de LED.

3. Circuit selon l'une des revendications précédentes, **caractérisé en ce que** le récepteur de courant commandable et/ou régulable et une source de courant constant variable.

4. Circuit selon l'une des revendications précédentes, **caractérisé par** un dispositif de mesure de courant (117), lequel détermine le courant de charge du dispositif de remplissage, le récepteur de courant commandable et/ou régulable réduisant le courant d'alimentation des chaînes de LED du courant de charge déterminé.

5. Circuit selon l'une des revendications précédentes, **caractérisé en ce que** le circuit est conçu de telle sorte que les chaînes de LED sont connectées en fonction d'une chute de tension aux bornes du récepteur de courant commandable et/ou régulable.

6. Circuit selon l'une des revendications précédentes, **caractérisé en ce que** le circuit possède plusieurs résistances parallèles (111) commutables, qui sont associées au circuit de remplissage branchées en série et peuvent être mises en circuit en fonction d'une valeur de la tension d'alimentation.

7. Circuit selon l'une des revendications précédentes, **caractérisé en ce que** le circuit possède un ou plusieurs condensateurs (123), un condensateur (123) branché en parallèle étant respectivement associé à une chaîne de LED, plusieurs chaînes de LED ou toutes les chaînes de LED.

8. Circuit selon l'une des revendications précédentes, **caractérisé en ce que** la borne de tension d'alimentation globale possède un circuit redresseur (115), notamment un circuit en pont de Graetz, lequel convertit une tension alternative en une tension continue.

9. Moyen d'éclairage, lequel possède un circuit selon l'une des revendications précédentes.

10. Lampe, notamment équipement d'éclairage des routes, équipement d'éclairage d'intérieur, équipement d'éclairage d'espace de bureau, équipement d'éclairage de poste de travail, équipement d'éclairage de parking ou équipement d'éclairage pour couloirs, hôtels, aéronefs et bateaux, laquelle possède un moyen d'éclairage selon la revendication 9.

11. Procédé pour faire fonctionner avec peu de scintillements des diodes électroluminescentes, comprenant les étapes suivantes :
- application d'une tension alternative en tant que tension d'alimentation dépendante du temps à un circuit comprenant n chaînes de LED (103, 105) en une connexion en chaînes de LED comprenant respectivement un nombre N de LED, n étant un nombre entier et supérieur à 1 et N étant un nombre entier et supérieur à 0 ;
- mise en circuit graduelle des chaînes de LED individuelles à mesure que la tension d'alimentation croît et mise hors circuit graduelle des chaînes de LED individuelles à mesure que la tension d'alimentation décroît ;
- alimentation d'au moins l'une des chaînes de LED avec une tension et/ou avec un courant par un circuit de remplissage lorsque la valeur de la tension d'alimentation se trouve au-dessous d'une tension de blocage d'alimentation ; et
- charge du circuit de remplissage lorsque la tension d'alimentation se trouve au-dessus d'une tension de départ d'alimentation,
**caractérisé par**
- réduction d'un courant d'alimentation des chaînes de LED d'un courant de charge du circuit de remplissage lorsqu'un courant de charge est acheminé au circuit de remplissage.
